# EUROPÄISCHE PATENTSCHRIFT

(11) **EP 2 410 132 B1**
(45) Veröffentlichungstag und Bekanntmachung des Hinweises auf die Patenterteilung: **12.06.2019**
(21) Anmeldenummer: 11005950.8
(22) Anmeldetag: 20.07.2011
(51) Int. Cl.: F01D 5/28, F04D 29/02, F04D 29/32

(54) **Verdichterschaufel eines Gasturbinentriebwerks mit selbstschärfender Vorderkantenstruktur**
Compressor blade of a gas turbine engine with self-sharpening leading edge structure
Aube de compresseur d'une turbine à gaz équipée d'une structure du bord d'attaque autoaiguisante

(30) Priorität: 23.07.2010 DE 102010032097
(43) Veröffentlichungstag der Anmeldung: 25.01.2012
(73) Patentinhaber: Rolls-Royce Deutschland Ltd & Co KG, 15827 Blankenfelde-Mahlow (DE); FormTech GmbH, 28844 Weyhe-Dreye (DE)
(72) Erfinder: Schreiber, Karl, 15838 Am Mellensee (DE); Beck, Werner, 28844 Weyhe (DE)
(74) Vertreter: Hoefer & Partner Patentanwälte mbB

(56) Entgegenhaltungen:
- EP-A2- 1 681 440
- EP-A2- 1 801 352
- DE-A1- 19 857 653
- US-A- 5 383 985

## Beschreibung

Die Erfindung bezieht sich auf eine Verdichterschaufel eines Gasturbinentriebwerks mit einer angeströmten Vorderkante, an welcher ein aus einem verschleißfesten Material gefertigtes Bauteil befestigt ist, gemäß den Merkmalen des Oberbegriffs des Anspruchs 1.

Verdichterschaufeln sind die ersten rotierenden Gebilde in einem Gasturbinentriebwerk und durch Fliehkräfte, Gasdruck und von dem strömenden Medium angeregte Schwingungen des Schaufelblattes, insbesondere aber auch durch angesaugte Fremdpartikel und Vogelschlag erheblichen Belastungen ausgesetzt. Sie sollen andererseits ein Überschallprofil mit einer möglichst dünnen, scharfen Gestaltung der Einlaufkante (Vorderkante) haben. Einer derartigen Ausbildung steht jedoch die Belastung und Beschädigung der Vorderkante durch auftreffende Fremdkörper entgegen.

Die erosive Wirkung und weitere Beschädigungen, hervorgerufen durch das Aufschlagen von Fremdpartikeln, treten besonders deutlich an der Einlaufkante und auf der Druckseite der Verdichterschaufel auf. Einer daher mit einem möglichst großen Radius ausgebildeten, stabilen Einlaufkante der Verdichterschaufel zur Verringerung der Beschädigung durch Fremdkörper in diesem Bereich stehen jedoch ein erheblicher aerodynamischer Verlust und eine damit verbundene Verringerung der Triebwerksleistung entgegen.

Um einer weiteren Zerstörung einer im Laufe der Zeit an der Vorderkante durch Fremdkörper beschädigten Verdichterschaufel zu begegnen, müssen alle Schaufeln des Fan von Zeit zu Zeit im Bereich der Einlaufkante nachgeschliffen und reprofiliert werden. Abgesehen davon, dass dieses Anschleifen und Reprofilieren mit einem erheblichen Arbeitsaufwand verbunden ist, kann die beschädigte Vorderkante nicht optimal angeschliffen werden. Das heißt, durch das Anschleifen vergrößert sich das Einlaufkantenprofil und damit auch der aerodynamische Verlust. Darüber hinaus kann die Einlaufkante auch nicht endlos nachgeschliffen werden.

Die Verdichterschaufeln eines Gasturbinentriebwerks werden zusätzlich und in erheblichem Umfang durch die beim Auftreffen eines Vogels auf die Fanschaufeln erzeugte Schlagwirkung belastet. Auch diesbezüglich ist ein kleiner Einlaufkantenradius, das heißt, eine spitze, scharfe Ausbildung der Einlaufkante der Verdichterschaufel, von Vorteil, da die scharfe Vorderkante den Vogel sofort durchschneidet und dadurch die Schlagwirkung auf die Schaufel und deren Belastung deutlich verringert wird. Aber auch der unter diesem Aspekt erforderlichen Gestaltung der Einlaufkante steht die Gefahr ihrer schnellen Beschädigung durch Erosion und der damit verbundene Arbeitsaufwand bei der Instandhaltung und der aerodynamische Verlust entgegen.

Zum Stand der Technik wird auf die DE 10 2005 061 673 A1 verwiesen.

Ferner zeigt DE 198 57 653 A1 eine bewegliche Turbinenschaufel mit einem Erosionsschutzteil an einem Vorderkantenbereich der Turbinenschaufel.

Der Erfindung liegt die Aufgabe zugrunde, eine Verdichterschaufel der eingangs beschriebenen Art zu schaffen, welche bei einfachem Aufbau und kostengünstiger Herstellbarkeit die Nachteile des Standes der Technik vermeidet und ein geringes Verschleißverhalten und einen hohen Wirkungsgrad aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein im Wesentlichen einen rechteckigen Querschnitt aufweisendes leistenartiges Bauteil vorgesehen, welches bevorzugterweise aus einem verschleißfesten Material, beispielsweise einem Manganhartstahl oder einem Stellite gefertigt ist, vorgesehen, welches die Anströmkante bildet. Das leistenartige Bauteil kann außer aus den genannten Werkstoffen auch aus Titanaluminiden oder anderen "harten" Titanlegierungen (jedenfalls härter als Ti6-4) bestehen. Hier gibt es einen besonderen Vorteil bezüglich der Diffusionsschweißeignung mit der Titanmatrix der Schaufel und weniger Probleme mit Verzug. Eine Kombination der Verdichterschaufel und des leistenartigen Bauteils aus Ti/Ti ist wegen der ungefähr gleichen Ausdehnungswerte einfacher als eine Kombination Ti/ Stahl mit unterschiedlichen Wärmedehnungsparametern. Das leistenartige Bauteil ist dabei in die Vorderkante der Schaufel eingesetzt. Bedingt durch das Material des Bauteils weist somit die Vorderkante eine in hohem Maße verschleißfeste Ausgestaltung auf. Üblicherweise ist eine derartige Verdichterschaufel, welche beispielsweise als Fanschaufel eines Gasturbinentriebwerks ausgebildet sein kann, als Kompositstruktur oder als Titan-Hohlstruktur oder als Titan-Vollstruktur ausgestaltet. Dabei ist bei der Kompositstruktur auf eine Kohlefaserstruktur oder Kohlefaserkern eine Titan-Abdeckung aufgebracht. Titan weist den Nachteil auf, dass eine Anströmkante im Hinblick auf die Gefahr von Rissen nicht mit einem beliebig kleinen Radius und somit nicht sehr scharfkantig ausgebildet sein kann. Zudem ergibt sich an der Vorderkante/Anströmkante während des Betriebs ein Verschleiß, der beispielsweise durch Erosion auftritt. Hierbei spielen beispielsweise in der Luft befindliche Partikel (Staub, Vulkanasche oder Ähnliches) eine Rolle. Auch durch das Auftreffen größerer Partikel oder Gegenstände, beispielsweise durch Vogelschlag oder durch Einsaugen von Gegenständen, kann ein Verschleiß auftreten. Dieser führt bei einer aus Titan gefertigten Vorderkante zu einer Vergrößerung des Anströmradius. Hierdurch ergibt sich eine erhebliche Senkung des Wirkungsgrades der Verdichterschaufel, die wiederum zu erhöhtem Treibstoffverbrauch eines Flugzeugs führt.

Erfindungsgemäß ist es besonders günstig, wenn das Bauteil entweder am Rand des Schaufelprofils angeordnet ist oder in das Schaufelprofil eingebettet ist. In beiden Fällen ergibt sich eine Ausgestaltung, bei welcher die eigentliche Anströmkante durch das Bauteil selbst gebildet wird.

Das leistenartige, mit einem im Wesentlichen rechteckigen Querschnitt versehene Bauteil ist, bezogen auf seine in der Längserstreckung des Schnitts angeordnete Mittellinie, bevorzugt in einem Winkel zur lokalen Anströmrichtung angeordnet. Dieser Winkel ist bevorzugterweise <45°. Da sich durch die Wölbung der Verdichterschaufel unterschiedliche Anströmwinkel, auch bezüglich der Profilsehne ergeben können, kann es bevorzugt sein, das leistenartige Bauteil in einer räumlichen Wendelung oder Krümmung auszubilden. Es ist jedoch auch möglich, das Bauteil geradlinig auszugestalten. Erfindungsgemäß kann es auch günstig sein, das Bauteil lediglich über einen Teil der radialen Länge der Verdichterschaufel vorzusehen. Bei der Anordnung in einem Winkel zu einer lokalen Anströmrichtung kann es günstig sein, wenn der Winkel <45° ist. Das Bauteil kann erfindungsgemäß auch in einem Winkel zu einer Profilsehne der Schaufel angeordnet werden, wobei ein Winkel in einem Bereich bis 45° ebenfalls bevorzugt ist.

Da das Bauteil erfindungsgemäß die eigentliche Anströmkante bildet, ist es günstig, wenn das Bauteil mit einer aerodynamisch ausgebildeten Kante versehen ist, welche bevorzugt abgerundet ausgebildet ist, bevorzugt einen kleinen Radius aufweist, wobei der Radius beispielsweise 0,5 mm beträgt. Hierdurch wird, in Verbindung mit dem Material des Bauteils, eine sehr scharfe Vorderkante realisiert, ohne dass eine Rissgefahr des Materials besteht.

Das Bauteil, welches bevorzugterweise aus einem Manganghartstahl oder Stellite besteht, ist bevorzugterweise mit dem Titanmaterial der Anströmkanten der Struktur der Schaufel gefügt, bevorzugt diffusionsgeschweißt oder einlaminiert oder verklebt. Dies kann entweder beidseitig oder nur einseitig, bezogen auf die jeweilige Längsseite des rechteckigen Querschnitts des Bauteils erfolgen.

Erfindungsgemäß ist die Verdichterschaufel als Fanschaufel oder als Verdichterschaufel eines Verdichters einer Gasturbine ausgebildet.

Im Folgenden wird die Erfindung anhand von Ausführungsbeispielen in Verbindung mit der Zeichnung beschrieben. Dabei zeigt:
- Fig. 1: eine Schnittansicht eines Verdichterschaufelprofils in schematischer Darstellung,
- Fig. 2: eine vergrößerte Darstellung unterschiedlicher Ausgestaltungsformen des Anströmbereichs,
- Fig. 3: eine Darstellung, analog Fig. 2, eines weiteren Ausführungsbeispiels, und
- Fig. 4: eine vereinfachte perspektivische Darstellung einer erfindungsgemäßen Verdichterschaufel (Fanschaufel).

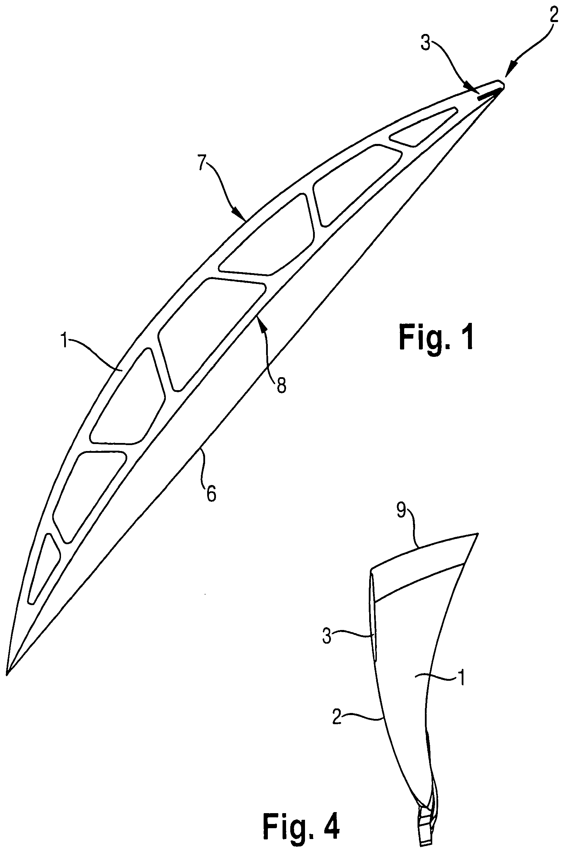

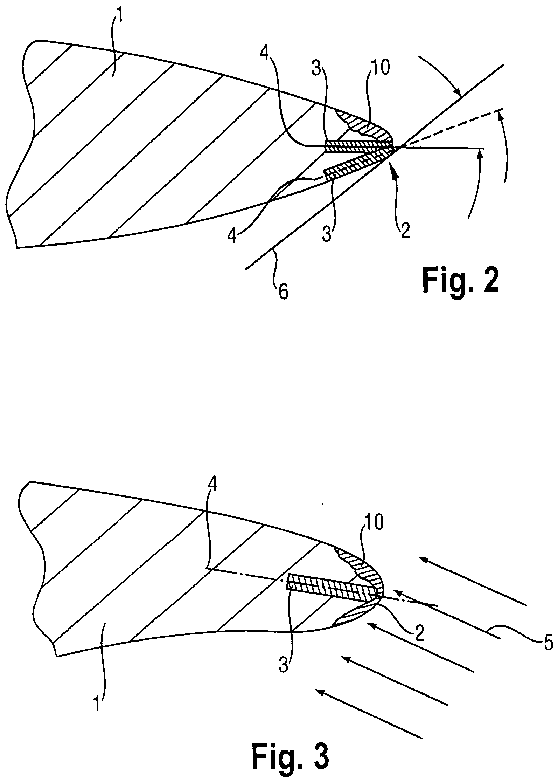

Die Fig. 1 zeigt eine vereinfachte Schnittansicht einer Verdichterschaufel 1 (Fanschaufel) mit einer Profilsehne 6 sowie einer Vorderkante 2, welche in einem Anströmbereich angeordnet ist (siehe insbesondere Fig. 3). Eine Saugseite der Verdichterschaufel 1 ist mit dem Bezugszeichen 7 dargestellt, eine Druckseite weist das Bezugszeichen 8 auf.

Im Bereich der Vorderkante 2 ist ein leistenförmiges, einem im Wesentlichen rechteckigen Querschnitt aufweisendes Bauteil 3 eingebettet, welches nachfolgend in Verbindung mit den Fig. 2 und 3 beschrieben werden wird.

Die Fig. 4 zeigt eine perspektivische, dreidimensionale Ansicht der erfindungsgemäßen Verdichterschaufel 1, dabei ist insbesondere eine Schaufelspitze 9 sowie der sich über einen Teil der radialen Länge erstreckende Bereich, in dem das Bauteil 3 angeordnet ist, dargestellt.

Die Fig. 2 und 3 zeigen vergrößerte Schnittansichten des Bereichs der Vorderkante 2.

Die Fig. 2 zeigt zwei mögliche Einbaulagen des Bauteils 3. Das Bauteil 3 kann dabei randseitig befestigt sein, so wie dies in der unteren Hälfte der Fig. 2 dargestellt ist. Die Fig. 2 zeigt die Profilsehne 6 sowie einen Einbauwinkel des einen im Wesentlichen rechteckigen Querschnitt aufweisenden Bauteils 3, bezogen auf dessen Mittelachse 4. Es ergibt sich, dass der Winkel zur Profilsehne beispielsweise 10° betragen kann.

Die Fig. 2 zeigt weiterhin eine mittige Anordnung des Bauteils 3, in welchem dieses beidseitig mit der Struktur der Verdichterschaufel 1 verbunden ist. Hierbei ergibt sich ein größerer Winkel zwischen der Mittelachse 4 und der Profilsehne 6, welcher bevorzugt kleiner als 45° ist.

Die Fig. 2 zeigt, dass durch eine auftretende Erosion (Verschleiß 10) der eigentliche Anströmbereich und die dort vorhandene Kante nicht verschleißt, so dass das Profil weiterhin "scharf" bleibt. Dies ist bedingt durch das erfindungsgemäß vorgesehene Bauteil 3, welches aus einem verschleißfesten Material gefertigt ist, während der Verschleiß 10 nur an dem Titanmaterial der Verdichterschaufel 10 auftritt.

Die Fig. 3 zeigt eine ähnliche Darstellung wie die Fig. 2, wobei zusätzlich die Anströmrichtung der Luft durch die Pfeile 5 dargestellt ist. Auch hierbei ergibt sich, dass der Verschleiß 10 des Titanmaterials die Kante des Bauteils 3 nicht betrifft, so dass diese weiterhin scharf bleibt. Das Bauteil 3 kann eine geringfügige Abrundung an der Anströmseite aufweisen, beispielsweise in einem Radiusbereich von 0,5 bis 1 mm oder in einem Radiusbereich von 0,1 bis 2 mm. Der Radius kann sich auch in radialer Länge der Schaufel ändern, um an die Strömungsbedingungen angepasst zu sein.

Da das umgebende Material auf Titanbasis einen höheren Erosionsverschleiß aufweist als die Hartmetall-Leiste, ist die Vorderkante "selbstschärfend".

### Bezugszeichenliste

- 1: Verdichterschaufel
- 2: Vorderkante
- 3: Bauteil
- 4: Mittelachse
- 5: Anströmrichtung
- 6: Profilsehne
- 7: Saugseite
- 8: Druckseite
- 9: Schaufelspitze
- 10: Verschleiß

## Patentansprüche

1. Verdichterschaufel (1) eines Gasturbinentriebwerks mit einer angeströmten Vorderkante (2), an welcher zumindest über einen Teilbereich der Länge der Vorderkante (2) ein aus einem verschleißfesten Material gefertigtes Bauteil (3), welches einen höheren Erosionsverschleiß-Widerstand besitzt als das Basismaterial, befestigt ist, wobei das Bauteil (3) leistenartig mit einem im Wesentlichen rechteckigen Querschnitt ausgebildet ist und, bezogen auf eine Schnittebene senkrecht zur Radialrichtung, nur an der Anströmseite des Profils der Verdichterschaufel in einem Teilbereich der Querschnittsfläche des Anströmbereichs angeordnet ist und die angeströmte Vorderkante (2) bildet,
**dadurch gekennzeichnet, dass** das Bauteil (3) in das Schaufelprofil eingebettet ist.

2. Verdichterschaufel nach Anspruch 1, **dadurch gekennzeichnet, dass** das Bauteil (3), bezogen auf dessen in der Längserstreckung des Schnitts angeordneten Mittellinie (4) in einem Winkel zu einer lokalen Anströmrichtung (5) angeordnet ist, bevorzugt in einem Winkel <45°.

3. Verdichterschaufel nach einem der Ansprüche 1 oder 2, **dadurch gekennzeichnet, dass** das Bauteil (3), bezogen auf dessen in der Längserstreckung des Schnitts angeordneten Mittellinie (4) in einem Winkel zu einer Profilsehne (6) der Schaufel (1) angeordnet ist, wobei der Winkel bevorzugt in einem Bereich bis 45° liegt.

4. Verdichterschaufel nach einem der Ansprüche 1 bis 3, **dadurch gekennzeichnet, dass** das Bauteil (3) an der Anströmseite mit einer aerodynamisch ausgebildeten Kante, bevorzugt abgerundet, ausgebildet ist, bevorzugt in einem Radius von 0,1 bis 2 mm.

5. Verdichterschaufel nach einem der Ansprüche 1 bis 4, **dadurch gekennzeichnet, dass** das Bauteil (3) aus einem Manganhartstahl oder aus Stellite oder aus Titanaluminiden oder aus einer Titanlegierung härter als Ti6-4 besteht.

6. Verdichterschaufel nach einem der Ansprüche 1 bis 5, **dadurch gekennzeichnet, dass** das Bauteil (3) an die bevorzugt aus Titan gefertigte Anströmkantenstruktur der Verdichterschaufel (1) gefügt, bevorzugt eindiffundiert oder einlaminiert und/oder einseitig oder beiseitig, bezogen auf die jeweilige Längsseite des rechteckigen Querschnitts, an der Anströmkantenstruktur befestigt ist.

7. Verdichterschaufel nach einem der Ansprüche 1 bis 6, **dadurch gekennzeichnet, dass** diese als Fanschaufel oder Verdichterschaufel eines Gasturbinentriebwerks ausgebildet ist.

8. Verdichterschaufel nach einem der Ansprüche 1 bis 7, **dadurch gekennzeichnet, dass** die Verdichterschaufel durch einen Diffusions-Fügeprozess für das Bauteil (3) gemeinsam mit dem Schaufelherstellprozess hergestellt ist, indem zwei Schaufelhälften, getrennt auf etwa der Mittellinie (4) zusammengefügt werden.

## Claims

1. Compressor blade (1) of a gas-turbine engine with a flow-exposed leading edge (2) to which over at least part of the length of the leading edge (2) a component (3), made of wear-resistant material and featuring a higher erosive wear resistance than the base material, is attached, wherein the component (3) forming the flow-exposed leading edge (2) is of a ridge-type design, features an essentially rectangular cross-section and, with reference to a sectional plane perpendicular to the radial direction, is arranged only on the inflow side of the compressor blade profile in a partial area of the sectional surface of the inflow area, **characterized in that** the component (3) is embedded in the blade profile.

2. Compressor blade in accordance with Claim 1, **characterized in that** the component (3) relative to its centerline (4) located in the longitudinal extension of the section, is arranged at an angle to a local inflow direction (5), preferably at an angle of less than 45°.

3. Compressor blade in accordance with one of the Claims 1 or 2, **characterized in that** the component (3) relative to its centerline (4) located in the longitudinal extension of the section, is arranged at an angle to a profile chord (6) of the blade (1), with the angle preferably lying in a range up to 45°.

4. Compressor blade in accordance with one of the Claims 1 to 3, **characterized in that** the component (3) on the inflow side is provided with an aerodynamically shaped edge which is preferably rounded and preferably features a radius ranging from 0.1 to 2 mm.

5. Compressor blade in accordance with one of the Claims 1 to 4, **characterized in that** the component (3) is made of manganese hard steel or stellite or of titanium aluminides or a titanium alloy harder than Ti 6-4.

6. Compressor blade in accordance with one of the Claims 1 to 5, **characterized in that** the component (3) is joined to the preferred titanium material of the inflow edge structure of the compressor blade (1), preferably diffusion welded or laminated and/ or attached to said inflow edge structure either on one side or on both sides relative to the respective longitudinal side of the rectangular cross-section.

7. Compressor blade in accordance with one of the Claims 1 to 6, **characterized in that** the latter is designed as fan blade or as compressor blade of a gas-turbine engine.

8. Compressor blade in accordance with one of the Claims 1 to 7, **characterized in that** the compressor blade is produced by a diffusion-joining process for the component (3) together with the blade manufacturing process, with two blade halves, separated approximately on the centerline (4), being joined together.

## Revendications

1. Aube de compresseur (1) d'un moteur à turbine à gaz avec un bord d'attaque (2) exposé au flux sur lequel est fixé, au moins sur une zone partielle de la longueur du bord d'attaque (2), un composant (3) fabriqué dans un matériau résistant à l'usure et qui possède une plus forte résistance à l'usure par érosion que le matériau de base, sachant que le composant (3) qui forme le bord d'attaque (2) exposé au flux, est conçu en forme de barre avec une section essentiellement rectangulaire et est disposé - par rapport à un plan de coupe perpendiculaire au sens radial - uniquement sur le côté d'afflux du profil d'aube de compresseur dans une zone partielle de la surface de section de la zone d'afflux, **caractérisée en ce que** le composant (3) est encastré dans le profil d'aube.

2. Aube de compresseur selon la revendication n° 1, **caractérisée en ce que** le composant (3) par rapport à sa ligne médiane (4) située dans l'extension longitudinale de la coupe, est disposé à un angle par rapport à un sens d'afflux (5) local, de préférence à un angle inférieur à 45°.

3. Aube de compresseur selon une des revendications n° 1 ou n° 2, **caractérisée en ce que** le composant (3) par rapport à sa ligne médiane (4) située dans l'extension longitudinale de la coupe, est disposé à un angle par rapport à une corde du profil (6) de l'aube (1), sachant que ledit angle se situe de préférence dans une plage jusqu'à 45°.

4. Aube de compresseur selon une des revendications n° 1 à n° 3, **caractérisée en ce que** le composant (3) sur le côté d'afflux est conçu avec un bord de forme aérodynamique, de préférence arrondie, et de préférence avec un rayon compris entre 0,1 et 2 mm.

5. Aube de compresseur selon une des revendications n° 1 à n° 4, **caractérisée en ce que** le composant (3) est constitué d'un acier dur au manganèse ou de stellite ou d'aluminiures de titane ou d'un alliage de titane plus dur que Ti6-4.

6. Aube de compresseur selon une des revendications n° 1 à n° 5, **caractérisée en ce que** le composant (3) est assemblé à la structure du bord d'afflux de l'aube de compresseur (1), de préférence fabriquée en titane, de préférence soudé par diffusion ou laminé et/ ou fixé à la structure du bord d'afflux d'un côté ou des deux côtés, par rapport au côté longitudinal respectif de la section rectangulaire.

7. Aube de compresseur selon une des revendications n° 1 à n° 6, **caractérisée en ce que** celle-ci est conçue en tant qu'aube de soufflante ou aube de compresseur d'un moteur à turbine à gaz.

8. Aube de compresseur selon une des revendications n° 1 à n° 7, **caractérisée en ce que** l'aube de compresseur est fabriquée au moyen d'un processus d'assemblage par diffusion pour le composant (3), associé au processus de fabrication d'aube dans lequel deux moitiés d'aube séparées approximativement sur la ligne médiane (4) sont assemblées ensemble.
